# EUROPEAN PATENT SPECIFICATION

(11) **EP 3 281 813 B1**
(45) Date of publication and mention of the grant of the patent: **18.09.2019**
(21) Application number: 17185307.0
(22) Date of filing: 08.08.2017
(51) Int. Cl.: B60G 11/28, B60G 3/20

(54) **VEHICLE SUSPENSION ASSEMBLY AND VEHICLE**
FAHRZEUGAUFHÄNGUNGSBAUGRUPPE UND FAHRZEUG
ENSEMBLE DE SUSPENSION DE VÉHICULE ET VÉHICULE

(30) Priority: 08.08.2016 IT 201600083554
(43) Date of publication of application: 14.02.2018
(73) Proprietor: Streparava S.p.A. Con Socio Unico, 25030 Adro (IT)
(72) Inventor: MEGA, Francesco, 25030 ADRO (IT)
(74) Representative: Eccetto, Mauro

(56) References cited:
- EP-A1- 0 548 989
- FR-A- 1 533 988
- FR-A1- 2 745 237

## Description

The present invention relates to a vehicle suspension assembly and vehicle.

In particular, the vehicle suspension assembly comprises an upper arm, a lower arm and a spring that is connected integrally to the upper arm. The upper arm is connected on one side by an articulated joint to a hub assembly, and on the other to a support structure of the vehicle by means of another articulated joint. Consequently, the spring performs an arched movement that requires an elevated overall width. Furthermore, the spring must withstand elevated loads.

FR 1 533 988 A discloses a suspension device for a vehicle.

It is the object of the present invention to realise a suspension assembly, which reduces at least one of the inconveniences of the prior art.

A vehicle suspension assembly is realised according to said objects; the suspension assembly comprising an upper arm; a lower arm; and a spring, preferably an air spring, having a first lower end and a second upper end; the spring being connected to the upper arm by means of a first articulated joint, in particular, a cylindrical joint.

Thanks to the present invention, the suspension assembly requires limited width and the movement of the spring occurs in a space obtained between the support structure and a hub assembly. Furthermore, on moving, the spring performs a movement that is principally vertical along said width.

According to a preferred embodiment, the suspension assembly comprises a support structure for the spring, which extends from the first joint to the spring and guides the kinematic movement of the spring, preferably along a path that extends, at least in part, vertically.

According to a preferred embodiment, the support structure of the spring comprises a support element, which is interposed between the first articulated joint and the first end of the spring.

According to a preferred embodiment, the suspension assembly comprises at least a first connecting element connected, on one side, to the first end of the spring by means of a second articulated joint, which is preferably spherical or cylindrical.

According to a preferred embodiment, the support structure comprises a connecting structure, which connects the first connecting element to the first end of the spring and houses part of the second articulated joint.

According to a preferred embodiment, wherein the connecting structure comprises a curved portion; the connecting structure extends towards a hub assembly of the vehicle.

According to a preferred embodiment, the suspension assembly comprises a third articulated joint, in particular spherical, to connect the first connecting element to a support structure of the vehicle; the support structure preferably being a frame of the vehicle or a sub-frame configured to be connected to the frame of the vehicle.

According to a preferred embodiment, the spring is configured to be connected to the support structure of the vehicle in particular along the second end.

According to a preferred embodiment, the suspension assembly comprises a fourth articulated joint, in particular spherical, housed on the upper arm and configured to connect the upper arm to a hub assembly of the vehicle; and a fifth articulated joint, in particular cylindrical, housed on the upper arm to connect the upper arm to a support structure of the vehicle; the fourth articulated joint being arranged along the arm between the first articulated joint and the fifth articulated joint.

Thanks to the present invention, after stress, related to the normal dynamics of the vehicle, the spring moves by a greater amount in relation to the movement of the wheel and this makes it possible to reduce the load on the spring. In other words, thanks to the present invention, when the spring is stressed, the relationship between the movement of the spring and the movement of the wheel is greater than 1 and this makes it possible to create a lever effect, which reduces the loads on the spring increasing the travel of the spring. Furthermore, the travel occurs in a space defined between the support structure and the hub assembly, which extends, at least in part, vertically.

According to a preferred embodiment, the suspension assembly comprises a fourth articulated joint, in particular spherical, housed on the upper arm and configured to connect the upper arm to a hub assembly of the vehicle; and a fifth articulated joint, in particular cylindrical, housed on the upper arm to connect the upper arm to a support structure of the vehicle; the distance between the first and the fifth articulated joint being greater than the distance between the fourth articulated joint and the fifth articulated joint.

According to a preferred embodiment, the suspension assembly comprises a fourth articulated joint, in particular spherical, housed on the upper arm and configured to connect the upper arm to a hub assembly of the vehicle; and a fifth articulated joint, in particular cylindrical, housed on the upper arm to connect the upper arm to a support structure of the vehicle; the distance between the first and fifth joint being equal to the distance between the fourth joint and the fifth joint.

A further object of the present invention is to realise a vehicle that reduces the inconveniences of the prior art.

A vehicle is realised according to said objects, comprising a suspension assembly according to any one of the claims from 1 to 11; a support structure, preferably a frame of the vehicle or a sub-frame, configured to be connected to the frame of the vehicle; and a hub assembly for each suspension assembly and articulated to the support structure by means of the respective suspension assembly, wherein the upper arm of the suspension assembly is connected on one side to the hub assembly by means of a fourth articulated joint and on the other side to the support structure by means of a fifth articulated joint; the lower arm of the suspension assembly is connected on one side to the hub assembly by means of a sixth articulated joint and on the other side to the support structure by means of a seventh articulated joint.

A vehicle is realised according to said objects, comprising at least one suspension assembly according to any of the claims from 5 or 6; a support structure, preferably a sub-frame or a frame; a hub assembly for each suspension assembly and articulated to the support structure by means of the respective suspension assembly, wherein the upper arm of the suspension assembly is connected on one side to the hub assembly by means of a fourth articulated joint and on the other side to the support structure by means of a fifth articulated joint; and a wheel, preferably pneumatic, connected to the hub assembly; the lower arm of the suspension assembly is connected on one side to the hub assembly by means of a sixth articulated joint and on the other side to the support structure by means of a seventh articulated joint; and wherein a portion of the connecting structure, preferably an end comprising the second articulated joint, is arranged above the wheel.

Further characteristics and advantages of the present invention will become clear from the following description of a non-limiting embodiment, with reference to the figures of the accompanying drawings, wherein:
- figure 1 is a front view, with parts removed for clarity, of a vehicle and a suspension assembly of the vehicle realised according to the present invention;
- figure 2 is a view from above, with parts removed for clarity, of figure 1;
- figure 3 is a side view of the figure 1; and
- figure 4 is a perspective view of figure 1.

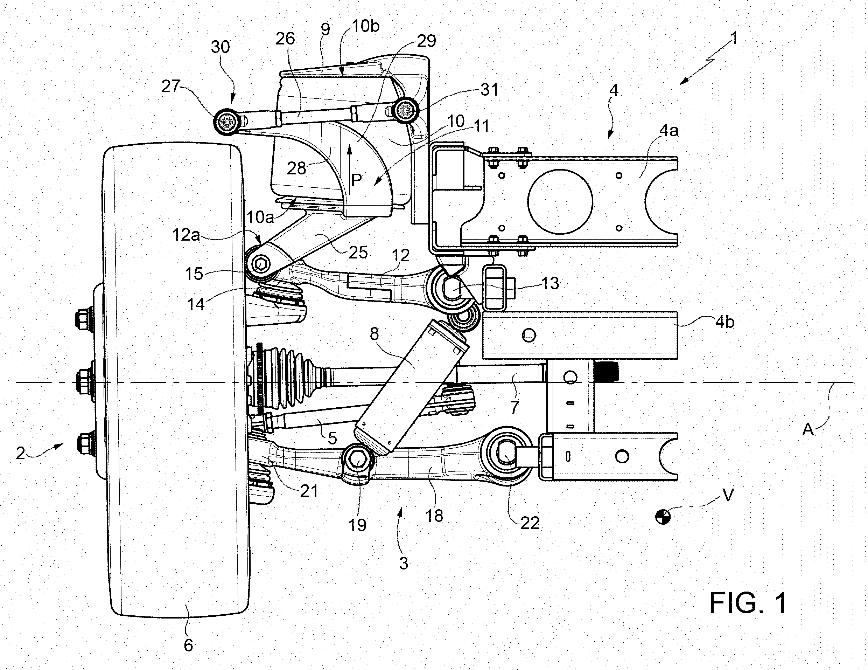

With reference to figure 1, 1 indicates a vehicle comprising four hub assemblies 2 (only one of which is visible in the figure), a suspension assembly 3 for each hub assembly 2, a support structure 4, in this particular illustrated case, a frame 4a of the vehicle and a sub-frame 4b, connected integrally to the frame 4 of the vehicle, and a cabin (not visible in the accompanying figures) connected to the support structure 4.

In an alternative embodiment of the present invention, the vehicle comprises a suspension assembly for two of the four hub assemblies, in particular for the front or rear hub assemblies, the remaining two hub assemblies are connected to each other by means of a rigid axle.

In a further alternative embodiment of the present invention, the vehicle comprises an equal number of hub assemblies, for example six hub assemblies and for each hub assembly or for one or more couples of hub assemblies it comprises respective suspension assemblies.

In further detail, the support structure 4 extends along an axis A perpendicular to an advancing direction V.

According to an alternative embodiment of the present invention, the sub-frame is omitted and the support structure is defined by a frame of the vehicle or by the cabin itself. In other words, the suspension assemblies are connected to the frame of the vehicle or to the cabin of the vehicle.

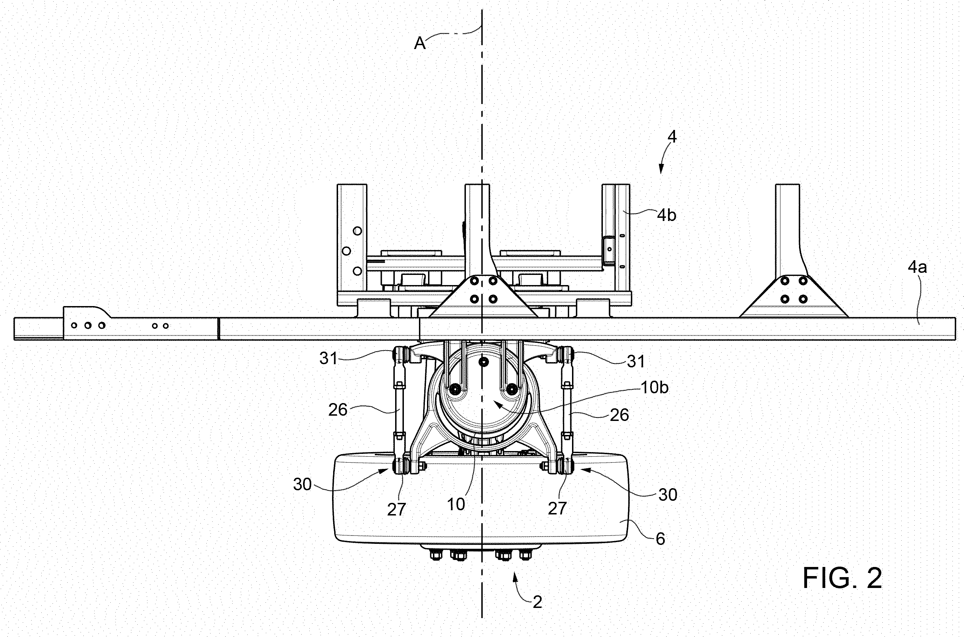

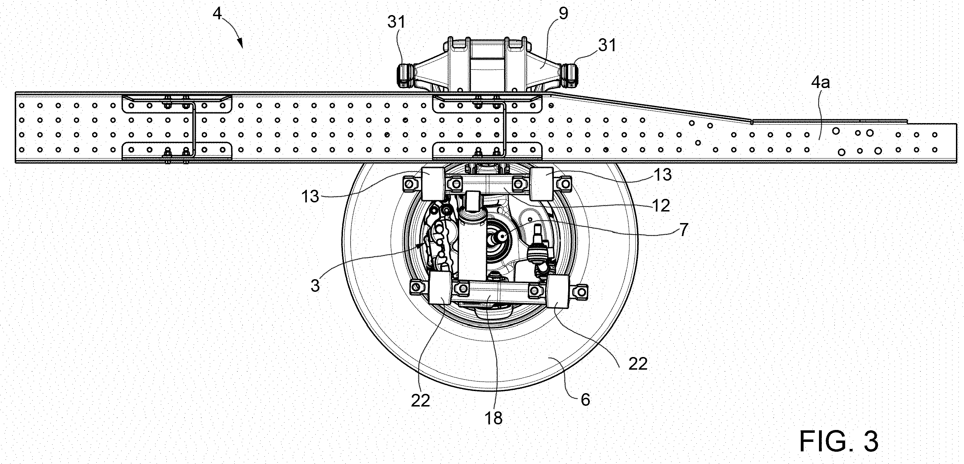

With reference to figures 1, 2 and 3, the vehicle 1 comprises a wheel 6, preferably pneumatic, for each hub assembly 2 connected to the respective hub assembly 2.

Furthermore, the hub assemblies 2 are articulated in an adjustable manner to the support structure 4 by means of the respective suspension assemblies 3.

The vehicle 1 comprises a drive shaft 7 connected to at least two hub assemblies 2 for transmitting the tension to the hub assemblies 2.

Furthermore, the vehicle 1 comprises a small arm 5 for each hub assembly 2, which is connected to a steering system for the hub assemblies 2 that are steering or it is connected to the support structure 4 of the vehicle for the hub assemblies 2, which are not steering.

With reference to the accompanying figures, each suspension assembly 3 is an independent articulated double quadrilateral. In particular, each suspension assembly 3 connects the hub assembly 2 in an articulated manner to the sub-frame 4; and comprises a damper 8 and a spring 10, in particular an air spring, arranged between the hub assembly 2 and the support structure 4.

In an alternative embodiment, the spring 10 is a helicoid spring.

With reference to the accompanying figures, each suspension assembly 3 comprises an upper arm 12 that is hinged, on one side, to the support structure 4, in particular to the sub-frame 4b, by means of a cylindrical joint 13; and it is coupled, on the other side, to the respective hub assembly 2 by means of a spherical articulated joint 14. The upper arm 12 is configured as a fork.

Furthermore, each suspension assembly 3 comprises a lower arm 18. The lower arm 18 is connected on one side, by means of a spherical articulated joint 21, to the hub assembly 2 and on the other side, by means of a cylindrical articulated joint 22 to the support structure 4, in particular to the sub-frame 4b.

The spring 10 has a lower end 10a and an upper end 10b.

With reference to the accompanying figures, the spring 10 is connected to the upper arm 12 by means of an articulated joint 15, in particular a cylindrical articulated joint 15.

The damper 8 is connected, on one side, to the lower arm 18 by means of a cylindrical articulated joint 19, and, on the other side, to the support structure 4 of the vehicle 1.

In further detail, each suspension assembly 3 comprises a support structure 11 of the spring 10, which extends from the articulated joint 15 passing through the spring 10 to the support structure 4 of the vehicle 1 guiding the kinematic movement of the spring 10 preferably along a path P, which extends, at least in part, vertically.

In further detail, the support structure 11 of the spring 10 comprises a support element 25, which is interposed between the articulated joint 15 and the end 10a of the spring 10. Furthermore, the end 10b of the spring 10 is connected to the support structure 14 by means of a connecting element 9, which is integral with the support structure 4.

The articulated joint 15 is arranged in an end portion 12a of the arm 12. The end portion 12a is facing the hub assembly 2. In further detail, the joint 14 is arranged between the articulated joint 15 and the articulated joint 13. Consequently, a distance between the articulated joint 15 and the articulated joint 13 is greater than a distance between the articulated joint 14 and the articulated joint 13.

In an alternative embodiment, the distance between the articulated joint 15 and the articulated joint 13 is equal to the distance between the articulated joint 14 and the articulated joint 13.

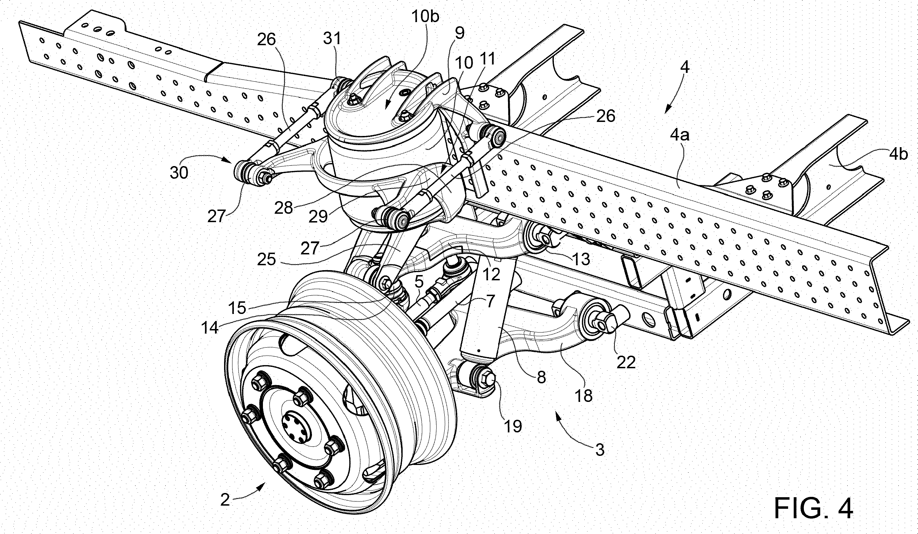

Furthermore, with reference to figures 1, 2 and 4, the support structure 11 comprises two connecting elements 26 connected, on one side, to the end 10a of the spring 10 by means of an articulated joint 27, in particular a spherical articulated joint. In further detail, the support structure 11 comprises a connecting structure 28, which connects the connecting elements 26 to the end 10a of the spring 10 and houses part of the articulated joints 27.

With reference to figure 1, the connecting structure 28 comprises a curved portion 29 and extends towards the respective hub assembly 2 of the vehicle 1.

In particular, the connecting structure 28 presents an end portion 30 that is arranged above the wheel 6, in particular the portion 30 houses the articulated joint 27. Consequently, the articulated joint 27 is arranged above the wheel 6 in at least one of the positions that the wheel 6 assumes in relation to the support structure 4.

With reference to figure 1, for each connecting element 26, the suspension assembly 3 comprises an articulated joint 31, in particular a spherical articulated joint, to connect the connecting element 26 to the support structure 4 of the vehicle 1. In the embodiment illustrated in the accompanying figures, the connecting element 26 is connected, by means of the articulated joint 31, to the connecting element 9 integral with the support structure 4.

Furthermore, the spring 10 is connected to the frame or to the cabin of the vehicle 1 in particular along the end 10b.

Finally, it is clear that variations and modifications can be made to the invention without going beyond the scope of the accompanying claims.

## Claims

1. A suspension assembly for a vehicle; the suspension assembly (3) comprising an upper arm (12); a lower arm (18); and a spring (10), preferably an air spring, having a first lower end (10a) and a second upper end (10b); the spring (10) being connected to the upper arm (12) by means of a first articulated joint (15), in particular a cylindrical articulated joint; the suspension assembly comprising a fourth articulated joint (14), in particular spherical, housed on the upper arm (12) and configured to connect the upper arm (12) to a hub assembly (2) of the vehicle (1); and a fifth articulated joint (13), in particular cylindrical, housed on the upper arm (12) to connect the upper arm (12) to a support structure (4) of the vehicle (1), preferably a sub-frame (4b) or a frame (4a) of the vehicle (1); **characterized by** the fourth articulated joint (14) being arranged along the upper arm (12) between the first articulated joint (15) and the fifth articulated joint (13).

2. A suspension assembly according to claim 1, wherein the suspension assembly (3) comprises a support structure (11) of the spring (10), which extends from the first articulated joint (15) to the spring (10) and guides the kinematic movement of the spring (10), preferably along a path (P), which extends, at least in part, vertically.

3. A suspension assembly according to claim 2, wherein the support structure (11) of the spring (10) comprises a support element (25), which is interposed between the first articulated joint (15) and the first end (10a) of the spring (10) .

4. A suspension assembly according to any one of the preceding claims, comprising at least a first connecting element (26) connected, on one side, to the first end (10a) of the spring (10) by means of a second articulated joint (27), in particular spherical or cylindrical.

5. A suspension assembly according to claim 4, wherein the support structure (11) comprises a connecting structure (28), which connects the first connecting element (26) to the first end of the spring (10a) and houses part of the second articulated joint (27).

6. A suspension assembly according to claim 5, wherein the connecting structure (28) comprises a curved portion (29); the connecting structure (28) extends towards a hub assembly (2) of the vehicle (1).

7. A suspension assembly according to any of the claims from 4 to 6, comprising a third articulated joint (31), in particular spherical, to connect the first connecting element (26) to a support structure (4) of the vehicle (1); preferably the support structure being a frame (4a) or a sub-frame (4b) configured to be connected to the frame (4a) of the vehicle (1).

8. A suspension assembly according to any one of the preceding claims, wherein the spring (10) is configured to be connected to a support structure (4) of the vehicle (1) in particular along the second end (10b).

9. A suspension assembly according to any one of the preceding claims, comprising a fourth articulated joint (14), in particular spherical, housed at least in part on the upper arm (12) and configured to connect the upper arm (12) to a hub assembly (2) of the vehicle (1); and a fifth articulated joint (13), in particular cylindrical, housed on the upper arm (12) to connect the upper arm (12) to a support structure (4) of the vehicle (1); the distance between the first articulated joint (15) and the fifth articulated joint (13) being greater than the distance between the fourth articulated joint (14) and the fifth articulated joint (13).

10. A suspension assembly according to any one of the preceding claims, comprising a fourth articulated joint (14), in particular spherical, housed at least in part on the upper arm (12) and configured to connect the upper arm (12) to a hub assembly (2) of the vehicle (1); and a fifth articulated joint (13), in particular cylindrical, housed on the upper arm (12) to connect the upper arm (12) to a support structure (4) of the vehicle (1); the distance between the first articulated joint (15) and the fifth articulated joint (13) being equal to the distance between the fourth articulated joint (14) and the fifth articulated joint (13).

11. A vehicle comprising at least one suspension assembly (3) according to any one of the preceding claims; a support structure (4), preferably a frame (4a) of the vehicle (1) or a sub-frame (4b) configured to be connected to the frame (4a) of the vehicle (1); and a hub assembly (2) for each suspension assembly (3) and articulated to the support structure (4) by means of the respective suspension assembly (3), wherein the upper arm (12) of the suspension assembly (3) is connected on one side to the hub assembly (2) by means of a fourth articulated joint (14) and on the other side to the support structure (4) by means of a fifth articulated joint (13); the lower arm (18) of the suspension assembly (3) is connected on one side to the hub assembly (2) by means of a sixth articulated joint (21) and on the other side to the support structure (4) by means of a seventh articulated joint (22).

12. A vehicle comprising at least one suspension assembly (3) according to any of the claims 5 or 6; a support structure (4), preferably a frame (4a) of the vehicle (1) or a sub-frame (4b) configured to be connected to the frame (4a) of the vehicle (1); a hub assembly (2) for each suspension assembly (3) and articulated to the support structure (4) by means of the respective suspension assembly (3), wherein the upper arm (12) of the suspension assembly (3) is connected on one side to the hub assembly (2) by means of a fourth articulated joint (14), and on the other side, to the support structure (4) by means of a fifth articulated joint (13); and a wheel (6), preferably pneumatic, connected to the hub assembly (2); the lower arm (18) of the suspension assembly (2) is connected on one side to the hub assembly (2) by means of a sixth articulated joint (21) and on the other side to the support structure (4) by means of a seventh articulated joint (22); and wherein a portion (30) of the connecting structure (28), preferably an end comprising the second articulated joint (27), is arranged above the wheel (6).

## Patentansprüche

1. Aufhängungsbaugruppe für ein Fahrzeug, wobei die Aufhängungsbaugruppe (3) einen oberen Arm (12), einen unteren Arm (18) und eine Feder (10), bevorzugt eine Luftfeder, mit einem ersten unteren Ende (10a) und einem zweiten oberen Ende (10b) aufweist, wobei die Feder (10) mit dem oberen Arm (12) durch eine erste Gelenkverbindung (15), insbesondere eine zylindrische Gelenkverbindung verbunden ist, wobei die Aufhängungsbaugruppe eine vierte, insbesondere kugelförmige, Gelenkverbindung (14) aufweist, die am oberen Arm (12) aufgenommen und dazu ausgebildet ist, den oberen Arm (12) mit einer Nabenbaugruppe (2) des Fahrzeugs (1) zu verbinden, und eine fünfte, insbesondere zylindrische, Gelenkverbindung (13) aufweist, die am oberen Arm (12) aufgenommen und dazu ausgebildet ist, den oberen Arm (12) mit einer Trägerstruktur (4) des Fahrzeugs (1), bevorzugt einem Unterrahmen (4b) oder einem Rahmen (4a) des Fahrzeugs (1), zu verbinden,
**dadurch gekennzeichnet, dass** die vierte Gelenkverbindung (14) entlang des oberen Arms (12) zwischen der ersten Gelenkverbindung (15) und der fünften Gelenkverbindung (13) angeordnet ist.

2. Aufhängungsbaugruppe nach Anspruch 1, wobei die Aufhängungsbaugruppe (3) eine Trägerstruktur (11) der Feder (10) aufweist, die sich von der ersten Gelenkverbindung (15) zur Feder (10) erstreckt und die kinematische Bewegung der Feder (10) bevorzugt entlang einem Pfad (P) führt, der zumindest teilweise vertikal verläuft.

3. Aufhängungsbaugruppe nach Anspruch 2, wobei die Trägerstruktur (11) der Feder (10) ein Trägerelement (25) aufweist, das zwischen der ersten Gelenkverbindung (15) und dem ersten Ende (10a) der Feder (10) eingesetzt ist.

4. Aufhängungsbaugruppe nach einem der vorstehenden Ansprüche, die zumindest ein erstes Verbindungselement (26) aufweist, das auf einer Seite durch eine zweite, bevorzugt kugelförmige oder zylindrische, Gelenkverbindung (27) mit dem ersten Ende (10a) der Feder (10) verbunden ist.

5. Aufhängungsbaugruppe nach Anspruch 4, wobei die Trägerstruktur (11) eine Verbindungsstruktur (28) aufweist, die das erste Verbindungselement (26) mit dem ersten Ende (10a) der Feder verbindet und einen Teil der zweiten Gelenkverbindung (27) aufnimmt.

6. Aufhängungsbaugruppe nach Anspruch 5, wobei die Verbindungsstruktur (28) einen gekrümmten Abschnitt (29) aufweist und sich die Verbindungsstruktur (28) zu einer Nabenbaugruppe (2) des Fahrzeugs (1) erstreckt.

7. Aufhängungsbaugruppe nach einem der Ansprüche 4 bis 6, aufweisend eine dritte, insbesondere kugelförmige, Gelenkverbindung (31), um das erste Verbindungselement (26) mit einer Trägerstruktur (4) des Fahrzeugs (1) zu verbinden; wobei die Trägerstruktur bevorzugt ein Rahmen (4a) oder ein Unterrahmen (4b) ist, der zum Verbinden mit dem Rahmen (4a) des Fahrzeugs (1) ausgebildet ist.

8. Aufhängungsbaugruppe nach einem der vorstehenden Ansprüche, wobei die Feder (10) zum Verbinden mit einer Trägerstruktur (4) der Fahrzeugs (1) ausgebildet ist, insbesondere entlang des zweiten Endes (10b).

9. Aufhängungsbaugruppe nach einem der vorstehenden Ansprüche, die eine vierte, insbesondere kugelförmige, Gelenkverbindung (14) aufweist, die zumindest teilweise am oberen Arm (12) aufgenommen und zur Verbindung des oberen Arms (12) mit einer Nabenbaugruppe (2) des Fahrzeugs (1) ausgebildet ist; und eine fünfte, insbesondere zylindrische, Gelenkverbindung (13) aufweist, die auf dem oberen Arm (12) zum Verbinden des oberen Arms (12) mit einer Trägerstruktur (4) des Fahrzeugs (1) aufgenommen ist, wobei der Abstand zwischen der ersten Gelenkverbindung (15) und der fünften Gelenkverbindung (13) größer als der Abstand zwischen der vierten Gelenkverbindung (14) und der fünften Gelenkverbindung (13) ist.

10. Aufhängungsbaugruppe nach einem der vorstehenden Ansprüche, die eine vierte, insbesondere kugelförmige, Gelenkverbindung (14) aufweist, die zumindest teilweise am oberen Arm (12) aufgenommen und zur Verbindung des oberen Arms (12) mit einer Nabenbaugruppe (2) des Fahrzeugs (1) ausgebildet ist; und eine fünfte, insbesondere zylindrische, Gelenkverbindung (13) aufweist, die auf dem oberen Arm (12) zum Verbinden des oberen Arms (12) mit einer Trägerstruktur (4) des Fahrzeugs (1) aufgenommen ist; wobei der Abstand zwischen der ersten Gelenkverbindung (15) und der fünften Gelenkverbindung (13) gleich dem Abstand zwischen der vierten Gelenkverbindung (14) und der fünften Gelenkverbindung (13) ist.

11. Fahrzeug, das zumindest eine Aufhängungsbaugruppe (3) nach einem der vorstehenden Ansprüche, eine Trägerstruktur (4), bevorzugt einen Rahmen (4a) des Fahrzeugs (1) oder einen Unterrahmen (4b), der zum Verbinden mit dem Rahmen (4a) des Fahrzeugs (1) ausgebildet ist; und eine Nabenbaugruppe (2) für jede Aufhängungsbaugruppe (3) aufweist, die durch die entsprechende Aufhängungsbaugruppe (3) an die Trägerstruktur (4) angelenkt ist, wobei der obere Arm (12) der Aufhängungsbaugruppe (3) auf einer Seite durch eine vierte Gelenkverbindung (14) mit der Nabenbaugruppe (2) und auf der anderen Seite durch eine fünfte Gelenkverbindung (13) mit der Trägerstruktur (4) verbunden ist; wobei der untere Arm (18) der Aufhängungsbaugruppe (3) auf einer Seite durch eine sechste Gelenkverbindung (21) mit der Nabenbaugruppe (2) und auf der anderen Seite durch eine siebente Gelenkverbindung (22) mit der Trägerstruktur (4) verbunden ist.

12. Fahrzeug, das zumindest eine Aufhängungsbaugruppe (3) nach einem der Ansprüche 5 oder 6, eine Trägerstruktur (4), bevorzugt einen Rahmen (4a) des Fahrzeugs (1) oder einen Unterrahmen (4b), der zum Verbinden mit dem Rahmen (4a) des Fahrzeugs (1) ausgebildet ist; und eine Nabenbaugruppe (2) für jede Aufhängungsbaugruppe (3) aufweist, die durch die entsprechende Aufhängungsbaugruppe (3) an die Trägerstruktur (4) angelenkt ist, wobei der obere Arm (12) der Aufhängungsbaugruppe (3) auf einer Seite durch eine vierte Gelenkverbindung (14) mit der Nabenbaugruppe (2) und auf der anderen Seite durch eine fünfte Gelenkverbindung (13) mit der Trägerstruktur (4) verbunden ist; und ein, bevorzugt pneumatisches, Rad (6) aufweist, das mit der Nabenbaugruppe (2) verbunden ist, wobei der untere Arm (18) der Aufhängungsbaugruppe (2) auf einer Seite durch eine sechste Gelenkverbindung (21) mit der Nabenbaugruppe (2) und auf der anderen Seite durch eine siebente Gelenkverbindung (22) mit der Trägerstruktur (4) verbunden ist; und wobei ein Abschnitt (30) der Verbindungsstruktur (28), bevorzugt ein Ende, das die zweite Gelenkverbindung (27) umfasst, über dem Rad (6) angeordnet ist.

## Revendications

1. Ensemble suspension pour un véhicule ; l'ensemble suspension (3) comprenant un bras supérieur (12) ; un bras inférieur (18) ; et un ressort (10), de préférence un ressort pneumatique, ayant une première extrémité inférieure (10a) et une deuxième extrémité supérieure (10b) ; le ressort (10) étant raccordé au bras supérieur (12) au moyen d'un premier joint articulé (15), en particulier un joint articulé cylindrique ; l'ensemble suspension comprenant un quatrième joint articulé (14), en particulier sphérique, logé sur le bras supérieur (12) et configuré pour raccorder le bras supérieur (12) à un ensemble moyeu (2) du véhicule (1); et un cinquième joint articulé (13), en particulier cylindrique, logé sur le bras supérieur (12) pour raccorder le bras supérieur (12) à une structure de support (4) du véhicule (1), de préférence un sous-châssis (4b) ou un châssis (4a) du véhicule (1) ; **caractérisé en ce que**
le quatrième joint articulé (14) est agencé le long du bras supérieur (12) entre le premier joint articulé (15) et le cinquième joint articulé (13).

2. Ensemble suspension selon la revendication 1, dans lequel l'ensemble suspension (3) comprend une structure de support (11) du ressort (10), qui s'étend du premier joint articulé (15) au ressort (10) et guide le mouvement cinématique du ressort (10), de préférence le long d'un chemin (P), qui s'étend, au moins en partie, verticalement.

3. Ensemble suspension selon la revendication 2, dans lequel la structure de support (11) du ressort (10) comprend un élément de support (25), qui est interposé entre le premier joint articulé (15) et la première extrémité (10a) du ressort (10).

4. Ensemble suspension selon l'une quelconque des revendications précédentes, comprenant au moins un premier élément de raccordement (26) raccordé, sur un côté, à la première extrémité (10a) du ressort (10) au moyen d'un deuxième joint articulé (27), en particulier sphérique ou cylindrique.

5. Ensemble suspension selon la revendication 4, dans lequel la structure de support (11) comprend une structure de raccordement (28), qui raccorde le premier élément de raccordement (26) à la première extrémité du ressort (10a) et loge une partie du deuxième joint articulé (27).

6. Ensemble suspension selon la revendication 5, dans lequel la structure de raccordement (28) comprend une portion incurvée (29) ; la structure de raccordement (28) s'étend vers un ensemble moyeu (2) du véhicule (1).

7. Ensemble suspension selon l'une quelconque des revendications 4 à 6, comprenant un troisième joint articulé (31), en particulier sphérique, pour raccorder le premier élément de raccordement (26) à une structure de support (4) du véhicule (1) ; de préférence la structure de support étant un châssis (4a) ou un sous-châssis (4b) configuré pour être raccordé au châssis (4a) du véhicule (1).

8. Ensemble suspension selon l'une quelconque des revendications précédentes, dans lequel le ressort (10) est configuré pour être raccordé à une structure de support (4) du véhicule (1) en particulier le long de la deuxième extrémité (10b).

9. Ensemble suspension selon l'une quelconque des revendications précédentes, comprenant un quatrième joint articulé (14), en particulier sphérique, logé au moins en partie sur le bras supérieur (12) et configuré pour raccorder le bras supérieur (12) à un ensemble moyeu (2) du véhicule (1) ; et un cinquième joint articulé (13), en particulier cylindrique, logé sur le bras supérieur (12) pour raccorder le bras supérieur (12) à une structure de support (4) du véhicule (1); la distance entre le premier joint articulé (15) et le cinquième joint articulé (13) étant plus grande que la distance entre le quatrième joint articulé (14) et le cinquième joint articulé (13).

10. Ensemble suspension selon l'une quelconque des revendications précédentes, comprenant un quatrième joint articulé (14), en particulier sphérique, logé au moins en partie sur le bras supérieur (12) et configuré pour raccorder le bras supérieur (12) à un ensemble moyeu (2) du véhicule (1) ; et un cinquième joint articulé (13), en particulier cylindrique, logé sur le bras supérieur (12) pour raccorder le bras supérieur (12) à une structure de support (4) du véhicule (1) ; la distance entre le premier joint articulé (15) et le cinquième joint articulé (13) étant égale à la distance entre le quatrième joint articulé (14) et le cinquième joint articulé (13).

11. Véhicule comprenant au moins un ensemble suspension (3) selon l'une quelconque des revendications précédentes ; une structure de support (4), de préférence un châssis (4a) du véhicule (1) ou un sous-châssis (4b) configuré pour être raccordé au châssis (4a) du véhicule (1); et un ensemble moyeu (2) pour chaque ensemble suspension (3) et articulé sur la structure de support (4) au moyen de l'ensemble suspension (3) respectif, dans lequel le bras supérieur (12) de l'ensemble suspension (3) est raccordé sur un côté à l'ensemble moyeu (2) au moyen d'un quatrième joint articulé (14) et sur l'autre côté à la structure de support (4) au moyen d'un cinquième joint articulé (13) ; le bras inférieur (18) de l'ensemble suspension (3) est raccordé sur un côté à l'ensemble moyeu (2) au moyen d'un sixième joint articulé (21) et sur l'autre côté à la structure de support (4) au moyen d'un septième joint articulé (22).

12. Véhicule comprenant au moins un ensemble suspension (3) selon l'une quelconque des revendications 5 ou 6; une structure de support (4), de préférence un châssis (4a) du véhicule (1) ou un sous-châssis (4b) configuré pour être raccordé au châssis (4a) du véhicule (1); un ensemble moyeu (2) pour chaque ensemble suspension (3) et articulé sur la structure de support (4) au moyen de l'ensemble suspension (3) respectif, dans lequel le bras supérieur (12) de l'ensemble suspension (3) est raccordé sur un côté à l'ensemble moyeu (2) au moyen d'un quatrième joint articulé (14), et sur l'autre côté, à la structure de support (4) au moyen d'un cinquième joint articulé (13); et une roue (6), de préférence pneumatique, raccordée à l'ensemble moyeu (2) ; le bras inférieur (18) de l'ensemble suspension (2) est raccordé sur un côté à l'ensemble moyeu (2) au moyen d'un sixième joint articulé (21) et sur l'autre côté à la structure de support (4) au moyen d'un septième joint articulé (22); et dans lequel une portion (30) de la structure de raccordement (28), de préférence une extrémité comprenant le deuxième joint articulé (27), est agencée au-dessus de la roue (6).
